Europäisches Patentamt

European Patent Office

Office européen des brevets

(19)

(11) Publication number: **0 423 939 A1**

# EUROPEAN PATENT APPLICATION

(12)

(21) Application number: **90310160.8**

(22) Date of filing: **17.09.90**

(51) Int. Cl.5: **A23L 1/308**, A21D 2/18

(30) Priority: **18.09.89 US 408344**

(43) Date of publication of application:
**24.04.91 Bulletin 91/17**

(84) Designated Contracting States:
**BE DE FR GB NL SE**

(71) Applicant: **A.E. STALEY MANUFACTURING COMPANY**
**2200 E. Eldorado Street**
**Decatur Illinois 62525(US)**

(72) Inventor: **Gaddy, James M.**
**3729 Northhaven Court, Apt. 3A**
**Decatur, Illinois 62526(US)**
Inventor: **White, Dorothy C.**
**R.R.1, Box 29**
**Argenta, Illinois 62501(US)**

(74) Representative: **Cockbain, Julian et al**
**Frank B. Dehn & Co. Imperial House 15-19,**
**Kingsway**
**London WC2B 6UZ(GB)**

(54) **Bulking agent composition.**

(57) A bulking agent useful in the replacement of carbohydrates and/or fats is provided. The bulking agent is comprised of a randomly-bonded polysaccharide having particular particle size characteristics which result in superior properties related to its use and/or handling. Also provided are culinary premixes, methods of formulating culinary premixes and baked goods.

EP 0 423 939 A1

## BULKING AGENT COMPOSITION

This invention relates to bulking agents useful in the production of food products and to a method of formulating such products.

The use of reduced calorie materials as bulking agents in place of one or more traditional or conventional ingredients is known. For example, polydextrose has been promoted to replace a portion of the sugar and/or fat in a variety of food products. The technical bulletin "Pfizer Polydextrose for the Market That's Shaping Up", pp. 1-14 (Pfizer, Inc., 1985), recites formulas for different food products in which polydextrose was used to replace a minor portion of the sucrose and/or fat in the formulation. The bulletin states that polydextrose is available as a powder having residual acidity or as an aqueous solution at 70% solids neutralized to a pH of 5 to 6.

U.S. Patent No. 3,766,165 and 3,876,794 (each to Rennhard) disclose the preparation and use of both soluble and insoluble polyglucoses and polymaltoses. In both patents, it is stated that insoluble polyglucose that is to be used as a flour substitute is ground to the consistency of wheat flour, typically 325 mesh (44 $\mu$m).

U.S. Patent No. 4,622,233 (Torres) discloses a purified polydextrose which, when blended as a wet cake with an artificial sweetener, is dried and milled to 420-840 micrometers, the particle size of household sucrose.

It is accordingly an object of the present invention to provide improved reduced calorie bulking agents for use in the preparation of food products.

Viewed from one aspect, the invention provides a particulate composition useful in the preparation of food products comprising particles of a water-soluble randomly-bonded polysaccharide, said particles having a particle size which promotes their water-solubility, preferably, a mean particle size within a range from about 75 micrometers to about 590 micrometers with at least 50% by weight of said particles being within said range.

It has been found that a randomly-bonded polysaccharide having controlled particle size characteristics has excellent properties as a bulking agent, i.e., it exhibits efficient hydration when exposed to a liquid aqueous medium (e.g. excellent solubility in water), but low hygroscopicity (e.g. low water vapor sorption), coupled with excellent handling characteristics such as excellent flowability and resistance to compaction during shipping. As used herein, the term "particle size" is used to refer to mean particle diameter and/or as a measure of particle size distribution depending upon the context of the use of the term, but the term "mean particle size" denotes mean diameter by volume, unless otherwise noted in context.

Viewed from a further aspect the invention also provides a culinary premix baking composition comprising flour and particles of a water-soluble randomly-bonded polysaccharide having a particle size which promotes the solubility of said particles, the flour and said particles being present respectively in major and minor amount by weight relative to the total dry weight of said composition.

The randomly-bonded polysaccharide in the premix composition conveniently has the same preferred particle size-range and distribution as in the particulate composition of the invention.

The water-solubility characteristics of the randomly-bonded polysaccaride of this invention are particularly advantageous in the preparation of a dough or a batter comprising a flour (e.g., for a baked good) wherein the randomly-bonded polysaccharide will compete with the other ingredients of the dough or batter for water of hydration.

Accordingly viewed from a still further aspect, the invention provides a baked foodstuff prepared from a composition comprising flour and particles of a water-soluble randomly-bonded polysaccharide having a particle size which promotes the solubility of said particles, the flour and said particles being present respectively in major and minor amount by weight relative to the total dry weight of dry ingredients of said composition.

Viewed from a still further aspect the invention also provides the use as a foodstuff component of graded particles of a water-soluble randomly-bonded polysaccharide whereof at least 50% by weight of said particles have a mean particle diameter greater than about 75 micrometers.

The particulate composition of this invention is comprised of a water-soluble randomly-bonded polysaccharide material having particular particle size characteristics as noted above and as discussed more fully below.

The randomly-bonded polysaccharide component useful in this invention is a polymer comprised of randomly-bonded saccharide units. The polymer may be produced by the acid-catalyzed polymerization of reducing saccharides of one or more sources thereof. The linkages between saccharide units which predominate in the polymer are primarily 1 --> 6 linkages, but other linkages also occur. The number average molecular weight will generally range from about 1,000 g/mole to about 36,000 g/mole. These polysaccharides are generally unaffected by amylolytic enzymes such as amylo(1,4)glucosidases, amylo-(1,4;1,6)glucosidases, amylo(1,4)dextrinases, and amylo(1,4)maltosidases as well as alpha- and beta-glucosidases, sucrase and phosphorylase. Thus, they are substantially inert to digestion by mammalian enzymes, although mammalian intestinal flora may be able to ferment a portion of the polysaccharide and make fermentation products available for digestion by mammals.

The randomly-branched polysaccharide can be prepared by any process which yields a product safe for human consumption. For example, U.S. Patent No. 3,766,165 (Rennhard) discloses the preparation of such polysaccharides by the melt polymerization of a reducing saccharide, e.g., glucose or maltose, using edible acids as catalysts and, optionally, crosslinking agents. U.S. Patent No. 4,622,233 (Torres), discloses a purified, decolorized polysaccharide of the type disclosed by Rennhard.

It will be understood that the terms polyglucose, polymaltose and polysaccharide, as used in describing this invention, are intended to denominate randomly-bonded polymeric materials in which the majority of monomeric moieties are glucose, maltose or other saccharide, as well as polymeric materials in which the glucose, maltose or saccharide moieties are esterified with moieties derived from any carboxylic acids used as polymerization activators.

The starting materials used in the melt polymerization process are maltose or glucose, although other simple sugars may be used as well. The sugars are supplied to the process as dry anhydrides or dry hydrated solids and are in powdered form.

The acids used as catalysts, crosslinking agents or polymerization activators may be any one of a series of edible acids. In particular, it is preferred to use citric, fumaric, tartaric, succinic, adipic, itaconic or terephthalic acids. The anhydrides of succinic, adipic, and itaconic acids may also be used. The acid or anhydride must be food-acceptable, that is, palatable and free of significant adverse effect at the level of ordinary use. Inedible acids, while chemically suitable to the process, are not suitable for use in the production of edible polyglucoses or polymaltoses. Therefore, the selection of the acid catalyst to be used must be guided by the needs of human non-toxicity. Inorganic acids may not be suitable for use as acid catalysts in anhydrous melt polymerization since they may not serve as crosslinking agents in the production of the insoluble polyglucoses and polymaltoses. Monocarboxylic acids may not be effective as crosslinking agents and will not be as satisfactory as polycarboxylic acids as catalysts in anhydrous melt polymerization. The acid selected should be relatively non-volatile, since more volatile acids may be vaporized during the heating and melting processes by which the mixture is polymerized. The polycarboxylic acids used are largely, but incompletely, esterified with the polyglucose or polymaltose in the polymerizing process, forming acid polyglucose esters or acid polymaltose esters. This is evidenced by the residual acidity of the polyglucoses and polymaltoses after dialysis, and the recovery of the acid upon hydrolysis of the product. The incorporation of the acid moieties within the polyglucoses or polymaltoses does not affect their suitability for human consumption.

The acid moieties are likely to serve as crosslinking agents between different polyglucose or polymaltose molecules in the insoluble polymers whereas, in the soluble polymers, each acid moiety is more likely to be esterified to only the polymer molecule.

The performance of this melt polymerization typically involves the steps of combining dry glucose or maltose with the proper amount of acid; the heating and melting of the glucose or maltose and the acid under reduced pressure; the maintenance of the molten conditions in the absence of water until substantial polymerization occurs; and the separation of the individual polymeric product types.

The anhydrous melt polymerization must be carried out at a pressure below atmospheric pressure. The preferred pressures do not exceed about 300 mm Hg (40 kPa) e.g. from about $10^{-5}$ to 100-300 mm Hg (1.3 mPa to 13.3-40 kPa), and can be obtained by the use of a vacuum pump, a steam jet ejector, an aspirator or by other means. The vacuum is required in order to exclude air from the polymerization and to remove water of hydration and the water liberated in the polymerization reaction. Air should be excluded from the environment of the polymerizing mixture in order to minimize decomposition and discoloration of the polyglucoses or polymaltoses formed in the polymerization. A fine stream of nitrogen may be useful with this invention as a method for excluding air and removing the waters of hydration and polymerization which are formed. Where the nitrogen purge is used, the vacuum requirements are lessened but pressures of 100-300 mm Hg (13.3-40 kPa) or less are still preferred.

The duration of the reaction and the reaction temperature are interdependent variables in the operation of this invention. A preferable temperature for the melt polymerization in the laboratory is from about 140° C to about 180° C. The precise temperature for the anhydrous melt polymerization depends on the initial ratio of glucose, maltose or other sugars to the acid which is used, the reaction time and the proportion of soluble polyglucoses or polymaltoses to insoluble, crosslinked polyglucoses or polymaltoses which is

3

desired in the final product mixture.

The production of a large portion of soluble glucose or maltose polymers usually requires a concentration of acid catalyst between about 0.1 and 10 mole percent, and it is preferred to use between 0.5 and 5 percent. As the amount of acid is increased, the degree of acid crosslinking increases and the proportion of water-insoluble polyglucose or polymaltose increases. Where acid concentrations are unnecessarily high, problems may arise with regard to neutralizing the excess acid which is present in the final product mixture. As those skilled in the art will perceive, the amount of acid required for a particular polymerization, the polymerization duration, the polymerization temperature and the nature of the products desired are all interdependent. The selection of the amount of acid to be used in this invention should take account of these factors.

The thermal exposure (reaction time and temperature) used in the production of soluble polyglucoses or polymaltoses by melt polymerization should be as low as possible, since discoloration, caramelization and degradation increase with prolonged exposure to high temperature. Fortunately, however, as the temperature of the polymerization is increased, the time required to achieve substantially complete polymerization decreases. Therefore, the process of this invention may be conducted with a polymerization temperature of about 160°C and a reaction duration of about 8 hours, as well as at a temperature of about 140°C and a reaction duration of about 24 hours, with approximately the same resultant degree of polymerization. Comparable results are also achieved in continuous polymerization at temperatures in the range of about 200-300°C in about 10 minutes or less without significant darkening, under vacuum of course.

This invention also includes embodiments wherein the compositions contain substantial amounts of water-insoluble randomly-bonded polysaccharide. The presence of water-soluble randomly-bonded polysaccharide will affect the dispersibility of water-insoluble material in applications where the water-insoluble material is dispersed in a phase which contains water. In the production of insoluble polyglucoses or polymaltoses, the molar ratio of glucose or maltose to acid may also be within the ranges specified above for production of the soluble polysaccharides, and especially about 2.5-10 mole percent of acid. It is preferred, however, in the performance of this invention to use a molar ratio of glucose or maltose to acid between about 12:1 and 20:1 in the production of insoluble polyglucose or polymaltose. These ratios are preferred in spite of the requirements of high reaction temperature and relatively long reaction times because the total yield of soluble and insoluble polyglucoses or polymaltoses is between 90 and 99 percent at these sugar to acid ratios. Thus, using these higher ratios, it is possible to produce in one reaction mixture a yield of between about 50 and 60 percent of insoluble polyglucose or polymaltose and of between about 40 and 50 percent of soluble polyglucose or polymaltose. The water-soluble polyglucose or polymaltose can be separated from the insoluble polyglucose or polymaltose contained in the reaction mixture by extraction with water and subsequent centrifugation. An additional important advantage of performing the reaction at high molar ratios of glucose or maltose to acid derives from the fact that the resultant products require little or no neutralization, where neutralization of excess acid levels introduces salt concentrations unacceptable in product for use in foods.

The inclusion of a food acceptable polyol such as sorbitol in the saccharide-carboxylic acid reaction mixtures prior to polycondensation yields superior products. In most cases, 90% or more of the polyol cannot be isolated from the condensation product, demonstrating that it has been chemically incorporated in the polymer. These additives function as internal plasticizers to reduce viscosity, and also provide improved color and taste. This is evident, for example, in the manufacture of hard candy from such condensation polymers, where the rheological properties of the melt are improved during processing, and a better tasting product of lighter color is obtained. In addition to sorbitol, other food-acceptable polyols include glycerol, crythritol, xylitol, mannitol and galactitol. Polyol concentrations of from about 5 to 20% by weight of the total reaction mixture provide such advantages, and levels of about 8 to 12% by weight are preferred.

Chemical purification is not generally required for the products of this invention. Where insoluble and soluble glucoses or maltoses are produced together, separation may be required.

Neutralization of the polyglucoses or polymaltoses may be desirable for certain applications, despite the very low levels of acid catalyst which are employed. For example, where the polyglucoses are to be used in dietetic foods containing whole milk, excess acid which may be present in the unneutralized polyglucoses will tend to curdle the milk. In the case of the soluble polyglucoses or polymaltoses, the solutions of the polyglucoses or polymaltoses are neutralized directly. This neutralization may be accomplished by adding carbonates or bicarbonates of potassium, sodium, calcium or magnesium to the solutions of polyglucose or polymaltose. Where sodium and potassium are used together, a physiologically balanced mixture may be used. The salt content of a typical polyglucose solution which has been adjusted to a pH of about 5 to 6 should be about 0.5 to 1.0 percent. Other materials which may be used to adjust the pH of soluble polyglucose or polymaltose solutions include L-lysine, d-glucosamine, N-methyl glucamine and ammonium hydroxide. The first two of these compounds are natural materials and should not be objectionable as an ingredient of dietetic foods and the last compound, which is rapidly excreted by the body in the form of urea, would not be objectionable as an ingredient in dietetic foods. N-methyl glucamine is used as a solubilizing agent for pharmaceuticals and should not be objectionable as an ingredient in dietetic foods. Other methods for reducing the acidity of polyglucose or polymaltose solutions are dialysis and ion exchange.

Decolorization of the soluble and insoluble polyglucoses and polymaltoses useful in this invention is often desirable for certain uses, despite their inherently light color as produced. Soluble polyglucose or polymaltose may be decolorized by contacting a solution of the polyglucose or polymaltose with activated carbon or charcoal, by slurrying or by passing the solution trough a bed of the solid adsorbent. Soluble and insoluble polyglucoses and polymaltoses may be bleached with sodium chlorite, hydrogen peroxide or similar materials which are used for bleaching flour. The insoluble polyglucose is a yellow material and often does not require bleaching at all.

The solutions of soluble polyglucose or polymaltose are almost tasteless and the insoluble polyglucose is a bland-tasting material.

Most of the polyglucoses produced by the melt polymerization have an average molecular weight from about 1,500 to about 36,000. The soluble polyglucoses will generally have an average molecular weight from about 1,500 to about 18,000 and the insoluble polyglucoses will generally have an average molecular weight between about 6,000 and about 36,000.

The randomly-bonded polysaccharide preferred for use herein is polydextrose. Polydextrose is defined by federal regulations as a partially metabolizable water-soluble polymer prepared from D-glucose with small amounts of sorbitol and citric acid, which polymer may be partially neutralized with potassium hydroxide. Polydextrose is commercially available from Pfizer, Inc. as a composition comprised of greater than 90% polymer, less than 4% each of glucose and levoglucosan and less than 2% sorbitol. The acid form is commercially available as a dry powder having less than 4% water. Neutralized polydextrose is available as a 70% dry solids solution with a pH of from 5 to 6 or as a neutralized powder. A neutralized solution can be treated to remove water and yield a dry material, e.g., by evaporation of the water at elevated temperatures and/or reduced pressures.

The particle size of the randomly-bonded polysaccharide can be determined and controlled by a variety of methods. The measurement of particle size and separation of particles based on size is generally described in C. Orr, "Size Measurement of Particles", Encyclopedia of Chemical Technology , Vol. 21, pp. 106-131 (Kirk-Othmer, eds., John Wiley & Sons, N.Y., N.Y., 3d ed., 1983), the disclosure of which is incorporated by reference. Typical separation techniques include dry-sieving. Dry-sieving is typically performed with a stack of sieves having openings diminishing in size from sieve to sieve from the top of the stack downward. Materials are segregated according to size by placing the material in the top sieve and shaking the stack to cause the material to be agitated and thus allow all particles to fall onto sieves through which they are unable to pass. The shaking can be accomplished by a variety of means, including manually, mechanically, and air pulses of sonic frequency.

Depending upon the precise source and nature of the randomly-bonded polysaccharide, it is generally necessary to mill it (i. e., reduce the particle size) prior to particle size separation. Techniques of particle size reduction are generally described in B. F. Faulkner and H. W. Rimmer, "Size Reduction", Encyclopedia of Chemical Technology , Vol. 21, pp. 132-162 (Kirk-Othmer, eds., John Wiley & Sons, N.Y., N.Y., 3d ed., 1983), the disclosure of which is incorporated by reference. Typical means of particle size reduction of the randomly-bonded polysaccharide include, compression mills, impact mills, tumbling mills, and the like, but an impact mill such as a hammermill is particularly suitable.

Based on actual experiments, it is recommended that, on an impact mill such as the Commutator Model DKA-6 from Fritzpatrick Co., a discharge screen of 2000 micrometers be used with a mill speed in the low range to minimize the tip speed of the blades. Preferred specifications on the discharge would be a minimum of 50% of the particles by weight in the range of 150-500 micrometers and the weight average of the particles be between 350-500 micrometers. Following the mill, the product should be screened to remove the particles under 177 micrometers (80 mesh) which can then be used in liquid products.

The randomly-bonded polysaccharide can be packed in bulk or individual containers of various size for shipment prior to incorporation in a food product as a bulking agent. It is an advantage of the present invention that less elaborate packaging and handling means can be used to deliver a superior product for use as a bulking agent, i.e., the composition of this invention possesses excellent hygroscopicity (low) flowability and resistance to compaction during handling.

The composition of this invention can be used in a variety of foodstuffs as a bulking agent, but is particularly useful in applications where it is dissolved or dispersed in an aqueous phase. Such applications include low or reduced calorie jams and jellies, beverages, baked goods, candies, desserts, dessert toppings and the like in which the randomly-bonded polysaccharide is used to replace the bulk lost by the reduction or elimination of nutritive carbohydrate (e.g., sugars and/or flours) and/or lipids (e.g., fats and oils). Preferred applications include those in which relatively little water is available and other ingredients compete for that water, e.g., batters and doughs which contain flour. The polysaccharide particles used according to this invention will hydrate in such a system much more efficiently and uniformly than a powdered polydextrose.

The dry blends of this invention can be made by dry blending the ingredients using conventional dry blending techniques, e.g., sifting and the like. The degree of homogenity is not critical, although the blend is preferably macroscopically uniform.

The dry blend has particular utility as a replacement for sugar and/or flour in baked goods. Accordingly, the dry blend, or the individual components thereof, can be mixed with a finely divided carbohydrate, e.g., all-purpose flour, to form a dry mix useful in preparing baked goods. By "baked goods" is meant those goods which are fried, e.g., doughnuts, shell pastries, and the like, as well as traditionally oven baked goods. The components of the dry blend will generally comprise only a minor portion of the carbohydrate-based dry mix. Typically, 50 to 100% weight of the sucrose used in a dry mix can be advantageously replaced by the components of the dry blend.

The other typical components of the baked products will be discussed in detail below.

Flour provides the major component in the bakery products of the present invention. The flour may be any finely comminuted meal of any cereal grain or edible seed, or mixtures thereof, as are known by one skilled in the art of baking. Typical non-limiting examples include wheat flour, barley flour, rye flour, cornstarch and corn flour, triticale, and also the so-called synthetic flours, which incorporate such materials as starch and soy protein isolate, with or without heat and/or steam treatment. The wheat flours are most typically employed in baking. They consist of several types, including hard red spring, hard red winter, soft red winter and white winter and spring. They are distinguished by differences in gluten quality, water absorption and protein content. Protein in these flours can vary from about 7 to about 14%, with the soft wheat flours having protein contents at the lower end of that range and hard winter wheat flours having protein contents at the upper end of that range.

The amount of protein in a baked good influences its texture and tenderness. The primary source for protein in baking is egg. However, since flour also contains some protein, the type of flour used in baking can influence the final product's texture somewhat. The higher the protein content in a flour, the tougher texture a product baked with that flour will have.

Shortening, in the form of oil or a higher melting fat, is generally included in baked goods of the type disclosed in the present invention. Shortenings contribute flavor and texture to baked goods. The shortenings that can be employed in the present invention are well known by one skilled in the art of baking and include solid or plastic, as well as liquid or semi-fluid, glyceride shortenings derived from animal, vegetable fats and oils, including synthetically prepared shortenings. These glycerides can contain saturated and unsaturated "long-chain" acyl radicals having from about 12 to about 22 carbon atoms such as lauroyl, lauroyleoyl, myristoyl, myristoleoyl, palmitoyl, palmitoleoyl, stearoyl, oleoyl, linoleoyl, linolenoyl, arachidoyl, arachidonoyl, behenoyl, erucoyl, and the like and are generally obtained from edible oils and fats such as corn oil, cottonseed oils, soybean oil, coconut oil, rapeseed oil, peanut oil, olive oil, palm oil, palm kernel oils, sunflower seed oil, wallflower oil, lard, tallow and the like. These glycerides can also contain, in part, one or two short-chain acyl groups having from 2 to about 6 carbon atoms such as acetyl, propanol, valeryl, and caproyl; they can be prepared by random or low-temperature interesterification reactions of fatty triglyceride containing oils and fats such as interesterified or rearranged cottonseed oil and lard; and they can be otherwise formed by various organic syntheses.

Some preferred shortenings are soybean-based shortenings or oils, hydrogenated soybean-based shortening or oil, corn oil, palm oil, hydrogenated palm oil, lard and tallow oils. Of these, "Crisco" brand shortening or oil, which is soybean-based, is preferred. "Crisco" oil or shortening is commercially available from The Procter & Gamble Company. The amount of shortening in the baked goods of the present invention is conveniently from about 10 to about 25%

Preferably, fresh whole eggs are used in making the baked products of the present invention. Eggs impart flavor, richness and color to the baked goods. On the average, an egg contains about 73% water and about 27% egg solids. The egg solids comprise about 48% protein, about 44% fat, and about minor materials. Alternatively, egg solids, particularly egg albumen and dried yolk, may be used in baking the products disclosed herein. Soy isolates, whey protein concentrates, or other egg substitutes may also be used herein in combination with, or in place of the egg solids. much substitutes are well known to those skilled in the art of baking. From 0 to about 6%, preferably from about 0.1 to about 6%, on a dry solids basis, of the formulation of the baked products of the present invention should comprise egg or egg substitute.

Chemical leavening agents can also be added to the compositions of the present invention to provide aeration to the final product. Examples include a baking soda, e. g., sodium, potassium, or ammonium bicarbonate, alone or in combination with a baking acid, preferably sodium aluminum phosphate, monocalcium phosphate, dicalcium phosphate or mixtures thereof. The selection of the leavening system is within the knowledge of one skilled in the art. From 0 to about 2%, preferably from about 0.1 to about 2%, of the formulation for the baked products of the present invention will typically be leavening agent.

Additional components can be added to the batter or dough of the present invention prior to baking to provide a wide variety of snack products. Additives may be of a type that remain as whole pieces in the snack product. Such additives include, but are not limited to, chocolate, peanut butter or butterscotch chips or chunks; fruit or fruit-flavored bits, such as blueberry, strawberry, or citrus flavored bits, other fruit flavored bits, such as cherry, blackberry, apricot, raisin, date, or apple; cereals, such as bran or oatmeal; and nutmeats, including walnuts, black walnuts, hickory nuts, hazel nuts, Brazil nuts, peanuts, macadamia nuts, pecans, almonds, cashews, coconut and the like. From 0 up to about 40% of the final baked product of the present invention can be such additive.

Other components of a type that are blended to the dough or batter prior to baking may be incorporated to add flavor, aroma, and color to the final baked product. For example, peanut butter; spices, such as cinnamon, mace, nutmeg, caraway, anise, allspice, poppy seed, coriander, ginger, cloves, fennel, and salt; and flavorings, such as banana, orange, lemon, mint or vanilla. Honey or molasses may also be used in the present invention but the levels of the individual sugars in the saccharide mixture must be altered to account for the sugars in the molasses or honey. Mixtures of these flavorings and whole piece components can be added to provide a variety of desirable products. Up to about 25% of the final baked product of the present invention can be comprised of such additives. The exact amount added for any of these flavoring components (whether they are of the type that is blended into the composition or the type that remain as whole pieces) will depend on personal preference and on what particularly is being added.

For a chocolate snack product, cocoa is incorporated into the dough or batter prior to baking. The cocoa used in this invention can be processed from either natural or "Dutched" chocolate from which a substantial portion of the fat or cocoa butter has been expressed or removed by solvent extraction, by pressing, or by other means known to those skilled in the art. Cocoa suitable for use in the practice of this invention may contain from about 1 to about 30% fatty constituents.

Dutched chocolate is prepared by treating cocoa nibs with an alkali material, such as potassium carbonate, in a manner well known in the art. Generally, it tends to have a darker color and also can be more flavorful than natural cocoas.

Chocolate can be used in practicing the present invention and it is intended, therefore, that chocolate, as described above, is to be encompassed by the term "cocoa." when chocolate is used, it should be in a finely divided form. It may be necessary to reduce the amount of shortening in the mix when chocolate is used because of the additional fat present as cocoa butter. It may also be necessary to add larger amounts of chocolate as compared to cocoa in order to provide equivalent flavoring and coloring.

The basic components and the optional components that make up the baked goods of the present invention can be combined in a number of slightly different ways to yield different types of baked goods. Obviously, the amount and type of flavorings, spices, or whole piece components, such as chocolate chips, nuts, etc., can be manipulated to vary the products. Different icings or streusel toppings can also be added for variation. Additionally, the texture of these products can be altered to yield different types of product. This is done through the manipulation of the total protein content in the composition of the baked good. It is the protein content that gives a baked product its structure. Two important sources of protein are found in baked goods, protein in the flour, and protein in the egg (or egg substitute). A brownie or cookie, which tends to be a denser product, contains a limited amount of protein. A snack cake or muffin is characterized by a lighter, airier structure. Additional protein must be added to create a product with this type of texture. The preferred source for this added protein is egg white. Other acceptable sources of protein that will give the product this lighter, airier texture include, but are not limited to, non-fat milk solids, casein, sodium caseinate, calcium caseinate, modified casein, sweet dairy whey, modified whey, and whey protein concentrate. For each product, the components can be combined with, for example, any planetary bowl mixer, ribbon blender, or other conventional mixer.

One aspect of the present invention is a culinary premix product for which the consumer completes preparation. Such a premix could be made by combining only the flour and unique dry blend component of the present invention. The consumer can then add a specified amount of shortening or oil, water, eggs, leavening, salt, and flavorings and bake the resulting batter to form the desired product. A preferred premix includes the dry blend mixture, flour, and leavening. The consumer would then need to add only fresh egg, shortening, and water to the mix and bake the batter to form the desired product. Such a form of premix would be especially suitable for sale to a consumer for baking in the home.

A culinary premix more suitable for sale to a commercial baker would also include dry egg solids in the mix so that the baker would only need to add water to form the batter for baking. The premix also comprises from about 10 to about 25% of a shortening component, from 0 to about 6%, preferably from about 0.1 to about 6%, on a dry solids basis, of an egg component and from 0 to about 2%, preferably from about 0.1 to about 2%, of a leavening agent.

The function of leavening agents is to aerate the dough or batter and thereby render it light and porous. The porosity of a batter, which on baking is transmitted to the crumb of the finished product, is important for various reasons: it is responsible for good volume, improves eating quality by tenderizing the crumb, and contributes to the esthetic enjoyment of the final product by endowing it with such desirable attributes as uniform cell structure, bright crumb color, soft texture, enhanced palatability, and others.

Leavening can be accomplished by various means. These include yeast fermentation to generate carbon dioxide gas, the mechanical incorporation of air into doughs and batters by mixing and creaming action, and by the formation of water vapor under the influence of the heat of baking. However, the nearly exclusive method used in leavening snack products is by chemical leaveners that consist of sodium bicarbonate and acidic agents. When these are combined and brought into contact with water, they react to generate carbon dioxide gas in controlled volumes and at controlled rates of evolution. Sodium bicarbonate ($NaHCO_3$), or baking soda, is by far the most widely used source of carbon dioxide in chemical leavening systems, primarily because of its low cost, ease of handling, absence of toxicity, general high purity, and absence of aftertaste in the baked product when it has fully reacted.

Common leavening acids used in conjunction with baking soda include:
monocalcium phosphate monohydrate (MCP);
anhydrous monocalcium phosphate (AMCP);
sodium acid pyrophosphate (SAPP);
sodium aluminum phosphate (SALP);
sodium aluminum sulfate (SAS);
monopotassium tartrate (cream of tartar);
dicalcium phosphate dihydrate (DCP); and
glucono-delta-lactone (GDL).

Baking powders can be used as the leavening agent. Baking powders conform to the following general definition issued by the U.S. Department of Agriculture: "Baking powder is the leavening agent produced by the mixing of an acid-reacting material and sodium bicarbonate, with or without starch or flour. It yields not less than 12% of available carbon dioxide. The acid-reacting materials in baking powder are: (1) tartaric acid or its acid salts; (2) acid salts of phosphoric acid; (3) compounds of aluminum; or (4) any combination in substantial proportions of the foregoing." This standard is specific in designating sodium bicarbonate as the only permissible alkaline ingredient of baking powders, and in setting a minimum limit of 12% of available carbon dioxide based on the weight of the product. The much broader selectivity allowed for the acid-reacting salts permits the formulation of baking powders with markedly different properties.

Baking powders are usually classified, according to their reaction rates, into fast-acting, slow-acting, and double-acting types. Fast-acting baking powders release most of their potential gas volume during the first few minutes of contact with liquid, thus imposing the need for fairly rapid processing of the dough or batter to avoid excessive volume loss. The slow-acting powders release practically none of their gas volume at low temperatures and, hence, require oven heat to achieve complete reaction and full evolution of the carbon dioxide gas. The double-acting powders react partially at low temperatures form smooth-flowing batters, but require high temperatures for complete reaction. The latter types of baking powder, formulated by the manufacturer to yield a uniform, regulated action, are the most commonly used in commercial cake baking.

Representative formulations of commercial baking powders are given below.

| COMMERCIAL BAKING POWDER COMPOSITIONS | | | | | | | | |
|---|---|---|---|---|---|---|---|---|
| Ingredients | Types (double acting) | | | | | | | |
| | A | B | C | D | E | F | G | H |
| Baking soda, granular | 27 | 30 | 30 | 30 | 30 | 30 | 30 | 30 |
| Monocalcium phosphate mono-hydrate (MCP) | - | 8.7 | 12 | 5.0 | 5.0 | - | 5.0 | 10 |
| Sodium aluminum sulfate (SAS) | - | 21 | 21 | 26 | - | - | - | - |
| Sodium acid pyrophosphate (SAPP) | - | - | - | - | 38 | 44 | 38 | - |
| Sodium aluminum phosphate (SALP) | - | - | - | - | - | - | - | 22 |
| Cream of tartar | 47 | - | - | - | - | - | - | - |
| Tartaric acid | 6 | - | - | - | - | - | - | - |
| Calcium sulfate | - | 13.7 | - | - | - | - | - | - |
| Calcium carbonate | - | - | - | 20 | - | - | - | - |
| Calcium lactate | - | - | - | - | 2.5 | - | - | - |
| Corn starch (redried) | 20 | 26.6 | 37 | 19 | 24.5 | 26 | 27 | 38 |

To assure that a preferred product results from such a dry premix, the components may be co-milled prior to mixing with other components. This procedure is disclosed in U.S. Patent No. 3,694,230, Cooke, issued Sept. 26, 1972:

Preferably, from about 0.1 to about 10% of an emulsifier should be added to the dry premix. Suitable emulsifiers include, but are not limited to, lactylated mono- and diglycerides, propylene glycol monoesters, polyglycerol esters, sorbitan esters, diacetylated tartaric acid esters of mono- and diglycerides, citric acid esters of monoglycerides, stearoyl-2-lactylates, polysorbates, succinylated monoglycerides, acetylated monoglycerides, ethoxylated monoglycerides, lecithin, sucrose monoester, and mixtures thereof.

Polyglycerol esters suitable for use as emulsifiers in the present invention have an average of from 2 to 10 glycerol units and from 1 to 3 fatty acyl groups of from 14 to 18 carbon atoms per glycerol moiety.

Preferably, the emulsifier is first dissolved in the oil or fat to produce an emulsified shortening. For best results, the emulsifier is melted and added to the shortening at a temperature above the melting point of the emulsifier to insure a homogeneous blend.

A preferred shortening/emulsifier system is that disclosed in U.S. Patent No. 4,456,626, Nelson et al., issued June 16, 1984. The shortening contains an emulsifier consisting essentially of a hydrophilic polyglycerol monoester and a propylene glycol monoester, wherein the fatty acids used to esterify the polyglycerol ester and propylene glycol esters have from about 16-22 carbon atoms, the ratio of propylene glycol monoester to polyglycerol ester being from about 2:1 to about 7:1. The remainder of the shortening system is fats, oils or hydrogenated fats and oils.

Any conventional methods of incorporating the emulsifier and shortening into the flour, leavening agent, and additional ingredients can be used to produce the premix. For example, the emulsified shortening and other ingredients can be combined with the flour by admixing these components in, for example, a planetary bowl mixer, a ribbon blender, a high-speed rotary mixer, or in other conventional mixers. Preferably, however, the shortening containing the emulsifier is first mixed with the flour to form an essentially homogeneous flour-shortening-emulsifier blend, and then the additional ingredients are admixed with this blend.

Packaging of the dry premix product in a sealed plastic film is sufficient. Since the water activity of the dry mix is essentially nil, i.e., from about 0.2 to about 0.4, there is little concern about microbiological growth with extended storage periods. Packaging must be done using generally accepted good manufacturing practices for foodstuffs.

The compositions of the present invention as described above can be formulated in several slightly different ways to yield various types of baked goods, including but not limited to, brownies, snack cakes, muffins, and cookies, all of which are within the scope of the present invention. The batter or dough of the desired snack product can be baked using radiant, conductive or convective exposure to energy of a type which imparts thermal energy to the product being baked such as conventional, convection, microwave oven baking or combinations thereof. Baking times and temperatures are dependent on the type of oven used and the type of product being baked. The products may be baked in batch or continuous ovens.

To realize a maximum shelf life for any of the final baked products prepared according to the present invention, packaging which allows no moisture to pass from the snack product to the environment or vice versa is desirable. A product packaged in this way would not be degraded at all whether stored in conditions of low or high humidity. Packaging which allows for microwave heating of the product prior to eating, such packaging at the same time being moisture tight, would be most desirable. The packaging should be done using generally accepted good manufacturing practices

The following non-limiting Examples provide further illustration of the invention. All parts, percentages and ratios set forth herein are by weight unless otherwise noted in context.

## EXAMPLE 1

A sample of citrated polydextrose was ground and screened through a series of seven screens of different mesh size to obtain seven fractions as identified in Table 1, below.

Table 1

| Fraction No. | Screen (mesh) | (μm) |
|---|---|---|
| 1 | -10, +35 | (2000, 500) |
| 2 | -35, +45 | ( 500, 350) |
| 3 | -45, +60 | ( 350, 250) |
| 4 | -60, +100 | ( 250, 149) |
| 5 | -100, +150 | ( 149, 100) |
| 6 | -150, +300 | (100, 48) |
| 7 | -300, | ( 48) |

Each fraction was subjected to a particle size distribution analysis using a Microtrac™ analyzer from Leeds and Northrup which analysis yielded the results shown in Table 2, below.

Table 2

| | Mean Particle Diameter (by volume in micrometers) | Percentage of Fraction (Wt. %) Within Particle Size Range Of | | | | | | |
|---|---|---|---|---|---|---|---|---|
| Fraction No. | | 500μm to 2000μm | 350μm to 500μm | 250μm to 350μm | 149μm to 250μm | 100μm to 140μm | 48μm to 149μm | less than 48μm |
| 1 | 415 | 40 | 26 | 8.0 | 25.5 | - | - | - |
| 2 | 456 | 40.6 | 37.0 | 11.0 | 11.1 | - | - | - |
| 3 | 396 | 25.4 | 31.1 | 24.4 | 16.8 | 2.0 | - | - |
| 4 | 291 | 14.4 | 9.2 | 18.8 | 38.3 | 15.9 | 3.0 | - |
| 5 | 137 | - | - | - | 21.8 | 45.3 | 18.6 | 14.2 |
| 6 | 71 | - | - | - | - | 21.2 | 46.2 | 32.2 |
| 7 | 40 | - | - | - | - | 5.2 | 17.9 | 76.4 |
| Composite | 215 | 15.4 | 9.4 | 7.2 | 19.8 | 13.2 | 27.7 | 7.0 |

Each sample (the "Composite" being the starting polydextrose before screening) was dissolved in a tall-form glass beaker into room temperature water at 5 and 10% dry solids. At 5% dry solids, the polydextrose was added both gradually over 15 seconds and dumped all at once. At 10% dry solids, the dumping method was the only one used. An overhead stirrer was used to mix the sample at 200 rpm. Rate of solubility was measured visually and observations recorded. The results are shown in Tables 3, 4 and 5. A commercially available sample of polydextrose ("Commercial") from Pfizer, Inc. having an average particle size of 52.4 micrometers (volume) and the following particle size distribution was also tested.

10

| Mean Particle Diameter (by volume in micrometers) | Percentage of Sample (Wt. %) | Cumulative Percentage |
|---|---|---|
| 4.7 to 6.6 | 2.1 | 2.1 |
| 6.6 to 9.4 | 2.5 | 4.7 |
| 9.4 to 13.0 | 4.6 | 9.3 |
| 13.0 to 19.0 | 4.6 | 13.9 |
| 19.0 to 27.0 | 8.6 | 22.5 |
| 27.0 to 38.0 | 7.7 | 30.2 |
| 38.0 to 53.0 | 11.2 | 41.4 |
| 53.0 to 75.0 | 16.3 | 57.7 |
| 75.0 to 106.0 | 13.3 | 71.0 |
| 106.0 to 150.0 | 17.6 | 88.5 |
| 150.0 to 212.0 | 11.0 | 99.5 |
| 212.0 to 300.0 | 0.0 | 99.5 |
| over 300.0 | 0.0 | 99.5 |

Table 3

| **Gradual Addition to 5% Dry Solids** | | |
|---|---|---|
| Fraction No. | Min:Sec | Comments |
| 1 | <1:00 | Dissolves readily |
| 2 | <1:00 | Dissolves readily |
| 3 | 1:00 | Dissolves readily |
| 4 | 2:30 | Agglomerates; sticks to paddle |
| 5 | <0.25 | Dissolves instantaneously |
| 6 | <0.25 | Dissolves instantaneously |
| 7 | 1:45 | Agglomerates; dissolves well |
| Composite | 1:30 | Sticks on paddle |
| Commercial | 3:30 | Balls onto paddle |

Table 4

| **Dump to 5% Dry Solids** | | |
|---|---|---|
| Fraction No. | Min:Sec | Comments |
| 1 | <1:00 | Agglomerates; doesn't stick to paddle |
| 2 | <1:00 | Disperses readily |
| 3 | 0:30 | Disperses readily |
| 4 | 3:30 | Balls up on paddle |
| 5 | 2:15 | Balls up under paddle |
| 6 | 2:30 | Balls up under paddle |
| 7 | 2:00 | Sits on surface |
| Composite | 4:30 | Balls up on paddle |
| Commercial | 9:15 | Large balls on paddle |

Table 5

| Dump to 10% Dry Solids | | |
|---|---|---|
| Fraction No. | Min:Sec | Comments |
| 1 | <1:00 | Dissolves readily |
| 2 | <1:00 | Dissolves readily |
| 3 | <1:00 | Dissolves readily |
| 4 | 7:30 | Balls up; sticks to paddle |
| 5 | 1:30 | Balls up under paddle |
| 6 | 3:00 | Balls up under paddle |
| 7 | -- | -- |
| Composite | 5.00 | Clumps and sticks to paddle |
| Commercial | 7:00 | Balls up on paddle |

Generally speaking, the larger particle sizes (greater than 300 micrometers) dissolve more readily and more consistently regardless of addition technique. The large particles tend to sink immediately to the bottom, form very loose, large clumps then disperse; whereas, the small particles sit on the surface of the water, and are bailed up as they vortex down the shaft of the stirrer. Once the particles form tight balls, they are slow to dissolve. In the polydextrose with a wide distribution of particle sizes, the large, loose clumps appear to combine with the small balls to form large pellets. These pellets are the most difficult of all to dissolve.

The larger particles are also easier to work with. They are more fluid and flowable and tend to be less tacky. The smaller particle sizes are less controllable because of their tendency to avalanche into the stir pot and become gummy when exposed to the air.

## EXAMPLE 2

Four test runs on grinding and screening polydextrose with a Commutator Model DKA-6 impact mill from Fitzpatrick Co. were made at the mill speed and with the discharge screen size shown in Table 6, below, along with the weight average particle size and the rate of dissolution when dumped to 9.8% dry solids, determined as in Example 1. The particle size distribution as determined by shaker screening is shown in Table 7.

Table 6

| Run No. | Mill Speed (rpm) | Screen Size (micrometers) | Size Weight Ave. | Solubility (min.) | vs. | Commercial (min.) |
|---|---|---|---|---|---|---|
| 1 | 2500 | 1000 | 229μm | 5:00 | | 7:00 |
| 2 | 2500 | 2000 | 421μm | 1:30 | | 11:30 |
| 3 | 1000 | 1000 | 236μm | 3:00 | | 11:30 |
| 4 | 2000 | 2000 | 629μm | 2:00 | | 11:30 |

## Table 7
### Particle Size (%)

| Run No. | +10* | -10 +20 | -20 +30 | -30 +35 | -35 +40 | -40 +45 | -45 +50 | -50 +60 |
|---------|------|---------|---------|---------|---------|---------|---------|---------|
| 1 | 0.01 | 0.02 | 0.33 | 2.42 | 2.97 | 5.56 | 9.43 | 6.89 |
| 2 | 0.00 | 5.81 | 14.99 | 11.41 | 6.85 | 8.72 | 9.17 | 5.06 |
| 3 | 0.03 | 0.07 | 2.59 | 6.64 | 5.46 | 7.76 | 9.22 | 5.23 |
| 4 | 0.01 | 21.86 | 19.91 | 10.30 | 5.82 | 6.97 | 6.73 | 2.89 |

## Table 7 (Cont'd)
### Particle Size (%)

| Run No. | -60 +80 | -80 +100 | -100 +150 | -150 +200 | -200 +300 | -300 +400 | -400 |
|---------|---------|----------|-----------|-----------|-----------|-----------|------|
| 1 | 14.28 | 12.46 | 26.60 | 2.93 | 9.70 | 4.56 | 1.83 |
| 2 | 15.20 | 4.01 | 11.72 | 4.18 | 3.41 | 0.92 | 0.81 |
| 3 | 26.81 | 4.69 | 13.68 | 13.88 | 10.44 | 1.87 | 1.61 |
| 4 | 9.27 | 2.81 | 5.18 | 4.43 | 1.88 | 1.20 | 0.72 |

*Mesh values in µm are as follows:

10 = 2000 µm, 20 = 850 µm, 30 = 600 µm, 35 = 500 µm,
40 = 425 µm, 45 = 350 µm, 50 = 300 µm, 60 = 250 µm,
80 = 180 µm, 100 = 149 µm, 150 = 100 µm, 200 = 75 µm,
300 = 48 µm, 400 = 38 µm.

In addition to the testing of Runs 1-4, above, Runs 2 and 4 were screened with a 120 mesh screen to remove fines (particles less than 125 micrometers). The solubility of the fractions (overs and fines of each of Runs 2 and 4) were measured as described above and the results reported below in Table 8.

Table 8

| Fraction | Time (min.) | Comments |
|---|---|---|
| Run No. 2, -120 mesh (125 μm) | 2:00 | Sample sat on surface - vortex down, tiny clumps floated around until dissolved |
| Run No. 2, +120 mesh (125 μm) | 1:40 | Bottom out; large clumps; some small floating clumps - large clump floated around |
| Run No. 4, -120 mesh (125 μm) | 2:00 | Sample settled on surface; small clumps floating around - small ball under paddle |
| Run No. 4, +120 mesh (125 μm) | 1:40 | Large clump, small clumps batted around; when finally reached bottom, dissolved readily |
| Commercial | 9:30 | Sample went to the bottom - balled up and stuck to paddle |
| Run No. 2, Composite | 1:30 | Same observations as -120 mesh (125μm), but less small floating material |
| Run No. 4, Composite | 1:45 | Same as -201 mesh (75μm), a lot of small floating material - a little stuck to paddle |

Large particles (greater than 250 micrometers) will attempt to clump but enough gaps are present to allow water to penetrate and dissolve the particles. If sufficient fines are present (greater than 40% under 150 micrometers), the gaps will fill with fines and solubility will be reduced. Fines of 20% or less under 150 micrometers do not significantly affect solubility of large particles.

Particles ranging from 125 micrometers and smaller will dissolve well as long as the majority of the particles by weight are larger than 75 micrometers. Particles larger than 500 micrometers will also dissolve well but will decrease in solubility as the surface area to volume ratio continues to decrease.

## EXAMPLE 3

A citrated polydextrose was ground and screened to provide seventeen fractions each having a different particle size range. The different fractions, along with a Commercial sample as described above, were analyzed for various properties, the results of which are shown in Tables 9 and 10, below. Angle of Repose and Bulk Density were measured as follows.

## Angle of Repose

The flow characteristics of a powder are measured by determining the Angle of Repose of a pile of the material formed on a horizontal surface under specified conditions.

## Apparatus

1. Powder funnel, glass, top 100 mm diameter, stem 18 mm O.D. and 35 mm long (Fisher Scientific Catalog No. 10-346-5C). The inside radius of the stem will be 7.25 mm.
2. Ring to hold funnel, supported so that there is no obstruction under the funnel.
3. Large sheet of paper such as brown wrapping paper.
4. Metric ruler.

## Procedure

1. Mount the funnel with the ring stand so that the funnel tip is 25.4 mm above the table top covered with brown wrapping paper.

2. Sight down through the funnel and dot the paper at the center of the funnel tip.

3. Pour sample through the funnel until the pile blocks the funnel.

4. Mark four spots on the circumference of the pile, ignoring dust beyond the pile and obvious anomalies around the pile.

5. Remove the pile of sample, measure in the distances from the central spot to the four peripheral spots, and average. This is the average radius, r, of the pile.

## Calculation

1. Calculate the tangent of the angle of repose:

$$\tan = \frac{25.4}{r - 7.25}$$

where tan = tangent of the angle of repose
r = average radius of the pile (step 5)
25.4 = height of tip above table in mm
7.25 = radius of funnel in mm

2. The angle of repose is calculated tangent. This is the angle of repose. Report it to the nearest degree.

## Bulk Density (Loose and Packed)

A graduate cylinder is loosely filled and then packed with sample using standard techniques. Loose and packed bulk densities are calculated from the sample weight and volumes.

### Special Apparatus

1. Cylinder Funnel Assembly: Select a 250 ml graduated cylinder having a graduated section (0 to 250 ml mark) not less than 24 cm and not more than 26 cm in length. Use a 7 cm 60 degree powder funnel having a stem 1 inch (2.54 cm) in length and 0.5 inch (1.27 cm) inside diameter; the stem end should be square cut.

2. Vibrator: The Syntron Paper Jogger, Type PJ4, Style 1783, is recommended; available from Syntron Company, Homer City, Pennsylvania.

### Procedure

1. Weigh the 250 ml graduated cylinder and place on the base of a ring stand.

2. With a 3 inch (7.62 cm) metal ring attached to the ring stand, support the powder funnel in a vertical position with the stem inside the cylinder 6 cm above the 250ml graduation mark.

3. With the aid of a spoon or large spatula, carefully add sample to the powder funnel until the cylinder is filled (level) to the 250 ml mark.

4. Weigh cylinder and contents on a torsion balance.

5. Place cylinder with loosely packed sample on wooden deck of vibrator.

6. Attach a 3 inch (7.62 cm) metal support ring to ring stand and position ring around cylinder at about 200 ml graduation mark to support the cylinder in center of the deck during vibration.

7. Start vibrator and increase vibration amplitude by means of rheostat to the point at which cylinder begins to bounce up from the deck rather vigorously, usually indicated by a break in the vibrating rhythm between the cylinder and deck.

8. Vibrate cylinder and sample for 5 minutes.

9. Note volume of packed sample.

### Calculations

1. Density (Loose) lbs./ft.$^3$ =
Loose-filled sample wt. (g) x 0.25

$$2. \quad \text{Density (Packed) lbs./ft.}^3 =$$

$$\frac{\text{Loose-filled sample wt. (g)}}{\text{Packed sample volume (ml)}} \times 62.4$$

3. Multiply value obtained in (1) or (2) by 16 to give density in kg/m$^3$.

Table 9

| Various Properties of Different Particle Size Ranges | | | | | | | |
|---|---|---|---|---|---|---|---|
| | | | | Density lb/ft$^3$ | | | |
| Fraction No. | Particle Size (μm) | % Water | Angle of Repose | Loose/Packed/Dif. | | | Solubility Rate (min:sec) |
| 1 | < 37 | 1.87 | ---- | ---- | ---- | ---- | 2:25 |
| 2 | 37-53 | 1.77 | 51.6 | 26.8 | ---- | ---- | 2:32 |
| 3 | 53-74 | 1.67 | 44.9 | 32.0 | 40.5 | 8.5 | 2:30 |
| 4 | 74-105 | 1.61 | 39.8 | 34.9 | 44.2 | 5.3 | 4:52 |
| 5 | 105-149 | 1.63 | 39.8 | 36.7 | 43.6 | 6.9 | 4:33 |
| 6 | 149-177 | 1.60 | 36.9 | 38.3 | 45.9 | 7.6 | 4:20 |
| 7 | 177-210 | 1.62 | 37.5 | 38.4 | 44.7 | 6.3 | 4:10 |
| 8 | 210-250 | 1.57 | 38.4 | 39.9 | 44.8 | 4.9 | 7:00 |
| 9 | 250-297 | 1.56 | 37.1 | 41.9 | 46.8 | 4.9 | 3:45 |
| 10 | 297-350 | 1.51 | 38.0 | 41.0 | 44.3 | 3.2 | 4:40 |
| 11 | 350-420 | 1.51 | 37.1 | 42.7 | 47.1 | 4.4 | 0:35 |
| 12 | 420-500 | 1.48 | 38.6 | 44.0 | 47.1 | 3.1 | 0:35-0:40 |
| 13 | 500-590 | 1.54 | 38.4 | 45.7 | 47.4 | 1.7 | 0:45-0:50 |
| 14 | 590-710 | 1.50 | 38.3 | 47.5 | 51.1 | 3.6 | 0:50-0:55 |
| 15 | 710-840 | 1.47 | 39.0 | 49.3 | 53.1 | 3.8 | 1:05 |
| 16 | 840-1190 | 1.48 | 38.6 | 50.3 | 53.4 | 3.1 | 1:35-1:40 |
| 17 | 1190-2000 | 1.46 | 39.8 | 52.3 | 53.6 | 1.3 | 2:05 |
| Commercial | 52 mean | ---- | 37.7 | 41.8 | 53.7 | 11.9 | 7:56 |

Table 10

| Water Sorption Isotherm | | | | | |
|---|---|---|---|---|---|
| (% Total Water Gained) | | | | | |
| Day | Fraction No. | 11.3% RH | 32.5% RH | 65% RH | 92.5% RH |
| 1 | 2 | 0.64 | 3.30 | 11.15 | 19.48 |
| | 8 | 0.42 | 1.13 | 10.73 | 16.42 |
| | 11 | 0.34 | 0.78 | 5.31 | 17.25 |
| | 15 | 0.09 | 0.33 | 7.31 | 16.01 |
| | Commercial | 1.60 | 2.70 | 9.69 | 16.66 |
| 3 | 2 | 1.06 | 4.94 | 13.97 | 33.07 |
| | 8 | 0.56 | 1.88 | 15.38 | 30.11 |
| | 11 | 0.59 | 1.36 | 8.04 | 31.42 |
| | 15 | 0.23 | 0.62 | 13.76 | 29.05 |
| | Commercial | 2.06 | 3.45 | 14.15 | 29.45 |
| 7 | 2 | 1.36 | 5.54 | 16.70 | 43.83 |
| | 8 | 0.86 | 3.01 | 18.27 | 42.39 |
| | 11 | 0.67 | 2.03 | 9.22 | 42.43 |
| | 15 | 0.22 | 0.87 | 17.36 | 41.78 |
| | Commercial | 2.33 | 4.19 | 17.36 | 39.94 |
| 21 | 2 | 1.33 | 5.84 | 19.30 | 56.32 |
| | 8 | 1.40 | 4.69 | 19.06 | 55.22 |
| | 11 | 1.11 | 3.52 | 9.56 | 56.34 |
| | 15 | 0.51 | 1.62 | 19.00 | 55.29 |
| | Commercial | 2.35 | 4.71 | 18.32 | 53.22 |

The % Water and Water Sorption data show that smaller particles adsorb more water than larger particles at dry and average relative humidities (RH). However, at damp relative humidity (65%), all sizes adsorb the same amount of water except for the No. 11 fraction (particle size range $350\mu m$ - $420\mu m$); which Consistently adsorbed only one-half the total water the other sizes did. At extremely high humidities, the different ranges adsorbed about the same quantity of moisture with the smallest particle size being slightly higher. The Commercial sample adsorbs larger quantities of water at dry and average humidities than the smallest particle size examined but behaves the same at damp and high relative humidity.

Angle of Repose initially decreases with Increasing particle size, from $37\mu m$ to $149\mu m$. Polydextrose particle ranges are level above $149\mu m$. This implies that particles smaller than $149\mu m$ show increasing flowability as the particles approach $149\mu m$; whereupon the particles level out to the same increased flowability. This was confirmed visually; particles smaller than $149\mu m$ tended to "avalanche" when poured, whereas the $194\mu m$ particles had a tendency to "roll" or flow.

Bulk Density (expressed as pounds per cubic feet) decreases with diminishing particle size, confirming the visual observation that as particles become smaller they become more fluffy and airy. Differences between loose and packed bulk densities generally are smaller as particle size increases, implying that larger particles will settle less upon handling.

Rate of Solubilization (the time it takes to totally dissolve 30 g of polydextrose in 270 g of water), very generally, becomes slower as the particle size increases. However, two phenomena are observed in this study: (1) Rate of Solubilization suddenly drops to its very slowest at sample No. 8 ($210\mu m$-$250\mu m$) and just as suddenly (2) hits its fastest rate at No. 11 ($350\mu m$-$420\mu m$). All of the particle sizes larger than $350\mu m$ dissolve more readily than any of the size ranges under $350\mu m$.

**EXAMPLE 4**

A cake can be made using the polydextrose of this invention as follows.

| Ingredients | Parts by Weight |
|---|---|
| Cake Flour | 95 |
| Polydextrose | 35 |
| Shortening (Beatricing from Durkee Foods) | 54 |
| Non-Fat Dry Milk | 10 |
| Salt | 4 |
| Xanthan Gum (Kelco) | .30 |
| Eggs | 60 |
| Flour | 90 |
| Baking Soda | 4 |
| Baking Powder | 5 |
| Starch (MIRA-GEL $^R$ 463 from A.E. Staley Mfg. Co.) | 10 |
| Water | 86 |
| Butter Flavor | 1 |
| Vanilla Flavor | 1 |
| Coloring (FD&C #5 Yellow) | .50 |

Procedure:

1) Blend cake flour and polydextrose for 1 min. at medium speed of mixing.
2) Blend Durkee shortening, non-fat dry milk, salt, gum, flavors, and color for 2 min. at medium speed.
3) Blend flour, baking soda, baking powder, and MIRA-GEL $^R$ 463 cold-water soluble starch.
4) Add egg and water, mix at medium speed for 2 min. Bake at 350° F (177° C) 30 min.

**Claims**

1. A particulate composition for food products comprising particles of a water-soluble randomly-bonded polysaccharide, said particles having a particle size which promotes the water-solubility of said particles.

2. A composition as claimed in claim 1 wherein at least 50% by weight of said particles have a mean particle diameter greater than about 75 micrometers.

3. A composition as claimed in claim 1 or claim 2 wherein said particles have a particle size distribution wherein less than 40% of said particles have a mean particle size of less than about 150 micrometers.

4. A composition as claimed in any one of claims 1 to 3 wherein said particles have a particle size distribution wherein less than 20% of said particles have a mean particle size of less than about 150 micrometers.

5. A composition as claimed in any one of claims 1 to 4 wherein said particles have a mean particle size greater than about 75 micrometers.

6. A composition as claimed in any one of claims 1 to 5 wherein said particles have a mean particle size of from about 75 micrometers to about 1190 micrometers.

7. A composition as claimed in any one of claims 1 to 6 wherein said particles have a range of from about 75 micrometers to about 590 micrometers with at least 50% by weight of said particles being within said range.

8. A composition as claimed in any of claims 1 to 7 wherein said particles have a range from greater than 75 micrometers to less than 420 micrometers.

9. A composition as claimed in any one of claims 1 to 8 wherein said particles have a mean particle size of from about 250 micrometers to about 590 micrometers.

10. A composition as claimed in any one of claims 1 to 9 wherein said particles have a mean particle size of from about 350 micrometers to about 590 micrometers.

11. A composition as claimed in any of claims 1 to 10 wherein said particles have a mean particle size of from about 350 micrometers to about 420 micrometers.

12. A composition as claimed in any of claims 1 to 11 wherein said particle size and size distribution is such that said particles are dry-flowing.

18

13. A composition as claimed in any one of claims 1 to 12 wherein said particle size is such that resistance to sorption of water by said particles is promoted.

14. A composition as claimed in any one of claims 1 to 13 wherein said particles consist essentially of said randomly-bonded polysaccharide.

15. A culinary premix baking composition comprising flour and particles of a water-soluble randomly-bonded polysaccharide having a particle size which promotes the solubility of said particles, the flour and said particles being present respectively in major and minor amount by weight relative to the total dry weight of said composition.

16. A baked foodstuff prepared from a composition comprising flour and particles of a water-soluble randomly-bonded polysaccharide having a particle size which promotes the solubility of said particles, the flour and said particles being present respectively in major and minor amount by weight relative to the total dry weight of dry ingredients of said composition.

17. Use as a foodstuff component of graded particles of a water-soluble randomly-bonded polysaccharide whereof at least 50% by weight of said particles have a mean particle diameter greater than about 75 micrometers.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | US-A-4 622 233 (A. TORRES) <br> * Claims 1,4 * | 1,2,5-7,9, 10,12-17 | A 23 <br> L 1/308 <br> A 21 D 2/18 |
| X | US-A-4 546 002 (R.R. LESHIK et al.) <br> * Column 5, lines 21-27,39-45; claim 1 * | 1-13,17 | |
| A | | 14-16 | |
| X | US-A-4 571 346 (D.M. LEHMANN et al.) <br> * Claim 1; column 3, paragraph 2; example II * | 1-3,5-8, 12-14,17 | |
| X | AU-A-4 775 57 (PFIZER INC.) <br> * Claims 1,2,3; examples 1,13 * | 1,2,5-8, 12-17 | |
| Y | EP-A-0 155 889 (NABISCO BRANDS INC.) <br> * Claim 1; ex. * | 1,2,5-7,9, 10,12-17 | |

**TECHNICAL FIELDS SEARCHED (Int. Cl.5)**

A 21 D
A 23 L

The present search report has been drawn up for all claims

| Place of search | Date of completion of search | Examiner |
|---|---|---|
| The Hague | 14 January 90 | COUCKE A.O.M. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document